# EUROPEAN PATENT SPECIFICATION

(11) **EP 2 634 211 B1**
(45) Date of publication and mention of the grant of the patent: **15.07.2015**
(21) Application number: 12158898.2
(22) Date of filing: 09.03.2012
(51) Int. Cl.: C08K 5/00

(54) **HEAT AND LIGHT RESISTANT POLYMER COMPOSITION**
WÄRME- UND LICHTBESTÄNDIGE POLYMERZUSAMMENSETZUNG
COMPOSITION DE POLYMÈRE RÉSISTANT À LA LUMIÈRE ET À LA CHALEUR

(30) Priority: 16.12.2011 US 201161576634 P
(43) Date of publication of application: 04.09.2013
(73) Proprietor: Solvay Specialty Polymers USA, LLC., Alpharetta, GA 30005-3914 (US)
(72) Inventor: Crowe, Christie W., Alpharetta, GA Georgia 30005 (US); Bushelman, Corinne, CUMMING, GA Georgia 30040 (US); Bongiovanni, Alessandro, ALPHARETTA, GA Georgia 30022 (US)
(74) Representative: Benvenuti, Federica

(56) References cited:
- EP-A1- 1 925 640
- WO-A1-2004/111158
- WO-A2-2007/033129
- US-A1- 2010 292 379
- US-B1- 6 376 584

## Description

### Field of the Invention

The present invention relates to polymeric compositions comprising at least one polyester, at least one hindered amine compound, and at least one phosphorous compound selected from the group consisting of phosphite esters, phosphonites and mixtures thereof.

The present invention further provides an article comprising the composition of the invention, such as a part of a light emitting diode (LED) devices.

### Background of the Invention

LEDs are increasingly being used as light sources in numerous applications due to their many advantages over traditional light sources. LEDs generally consume significantly less power than incandescent and other light sources, require a low voltage to operate, and are resistant to mechanical shock. As a result, they are displacing incandescent and other light sources in many uses and have found applications in such disparate areas as traffic signals, interior and exterior lighting, cellular telephone displays, automotive displays, and flashlights.

LED components, such as housings, reflectors and reflector plates require an especially demanding combination of excellent color and improved physical properties. Ceramics may be advantageously used in those applications, but are still extremely costly and require demanding processing technologies. Therefore, polymer compositions have been extensively studied and developed to replace ceramics as a lower cost material. A great benefit of polymers is that they may be injection molded and therefore offer considerable design flexibility. LED applications require polymer compositions with good opacity and outstanding reflective properties. One problem noted with the polymer compositions used for the manufacture of LED components is that they tend to yellow when exposed to light and elevated temperatures. For example, during fabrication, the LED components are heated to about 180°C to cure an epoxy or silicon encapsulant. The LED components are also exposed to temperatures above 260°C while soldering operations are performed. In addition, while in use, LED components, such as automobile components, are routinely subjected to temperatures above 80°C. This exposure to high temperatures causes yellowing of polymer compositions used for forming LED components.

Desirably, reflector plates of LEDs and, *in fine,* the polymer compositions from which they are made, should comply with a wide set of requirements, including, notably, high reflectance of light (in general, of visible light), high whiteness, good processability (e.g. good moldability), high dimensional stability (notably low coefficient of linear expansion), high mechanical strength, high heat deflection temperature, and high heat resistance (low discoloration and low loss of reflectance when exposed to a high temperature).

Unfortunately, various prior art polymer compositions used in LED applications tend to yellow when exposed to light and heat.

WO 2007/033129 discloses light-emitting diode assembly housings comprising poly(1,4-cyclohexanedimethanol terephthalate) compositions. More specifically, WO 2007/033129 relates to light-emitting diode assembly housing compositions comprising from 40 to 95 wt. % of poly(1,4-cyclohexanedimethanol terephthalate), from 5 to 60 wt. % of titanium dioxide, from 0 to 40 wt. % of at least one inorganic reinforcing agent or filler, and from 0 to 3 wt. % of at least one oxidative stabilizer, wherein the weight percentages are based on the total weight of the composition.

EP1925640 relates to transparent polycarbonate-polyester resin compositions comprising at least one organic phosphoric ester metal salt featuring good hydrolysis and chemical resistance.

WO 2004/111158 relates to thermoplastic compositions stabilized against degradation, comprising a thermoplastic resin, a neo diol phosphite stabilizer; and a stabilizer selected from the group consisting of phenolic antioxidants, hindered amine light stabilizers, ultraviolet light stabilizers, organic phosphorus compounds, alkaline metal salts of fatty acids, hydroxylamines, tertiary amine oxides, 3- arylbenzofuranones, and thiosynergists.

US 6376584 discloses certain hindered amines and their compositions with certain polymers.

One of ordinary skill in the art will recognize that further improvements in heat stability, molding performance and reflectivity are advantageous for the development of LED devices.

The inventors have discovered that the presence of two specific additives greatly enhances the behavior of polyester compositions in a synergistic way when submitted to concurrent heat and light exposure.

The polyester compositions according to the present invention satisfy the above-mentioned requirements and will be described in detail hereafter.

### Summary of the Invention

In a first aspect, the present invention relates to a polymer composition comprising :
- at least one polyester ;
- at most 3.5 wt. % of at least one hindered amine compound; and
- at least 0.3 wt. % of at least one phosphorous compound selected from the group consisting of phosphite esters phosphonites and mixtures thereof.

In a second aspect, the present invention relates to articles comprising at least one part comprising the invented polymer composition and, in particular, to parts of LED devices made from such composition.

### Detailed Description of the Invention

The polymer composition according to the present invention comprises three essential ingredients that are described in detail here below :

### The polyester

The term "polyester" is intended to denote a polymer comprising at least 50 mol %, preferably at least 85 mol %, of recurring units comprising at least one ester moiety (commonly described with the formula : R-(C=O)-OR). Polyesters may be obtained by ring opening polymerization of a cyclic monomer (M_{A}) comprising at least one ester moiety ; by polycondensation of a monomer (M_{B}) comprising at least one hydroxyl group and at least one carboxylic acid group ; or by polycondensation of at least one monomer (M_{C}) comprising at least two hydroxyl groups (a diol) and at least one monomer (M_{D}) comprising at least two carboxylic acid groups (a dicarboxylic acid).

Non limitative examples of monomers (M_{A}) include lactide and caprolactone.

Non limitative examples of monomers (M_{B}) include glycolic acid, 4-hydroxybenzoic acid, 6-hydroxynaphthalene-2-carboxylic acid.

Non limitative examples of monomers (M_{C}) include 1,4-cyclohexanedimethanol ; ethylene glycol ; 1,4-butanediol ; 1,3-propanediol ; 1,5-pentanediol,1,6-hexanediol ; and neopentyl glycol, while 1,4-cyclohexanedimethanol and neopentyl glycol are preferred.

Non limitative examples of monomers (M_{D}) include terephthalic acid, isophthalic acid, naphthalene dicarboxylic acids, cyclohexane dicarboxylic acid, succinic acid, sebacic acid, and adipic acid, while terephthalic acid and cyclohexane dicarboxylic acid are preferred.

Depending on the choice of monomers, polyesters can be either wholly aliphatic, semi-aromatic, or wholly aromatic.

The polyester of the invented composition may be a copolymer or a homopolymer.

When the polyester of the invented composition is a copolymer, preferably at least 50 mol %, more preferably at least 60 mol %, still more preferably at least 70 mol %, even more preferably at least 80 mol %, and most preferably at least 90 mol % of the recurring units are obtained through the polycondensation of terephthalic acid. More preferably, at least 50 mol %, still more preferably at least 60 mol %, even more preferably at least 70 mol %, and most preferably at least 80 mol % of the recurring units are obtained through the polycondensation of terephthalic acid with 1,4-cyclohexylenedimethanol.

When the polyester of the invented composition is a homopolymer, it may be selected from the group consisting of : polyglycolide or polyglycolic acid (PGA), polylactic acid (PLA), polycaprolactone (PCL), polyethylene adipate (PEA), polyhydroxyalkanoate (PHA), polybutylene terephthalate (PBT), polypropylene terephthalate (PPT), polytrimethylene terephthalate (PTT), polyethylene naphthalate (PEN), polyethylene terephthalate (PET), poly(1,4-cyclohexylenedimethylene terephthalate) (PCT), and Liquid Crystalline Polyesters (LCP). It is preferably selected from the group consisting of PBT, PTT, PEN, PET, PCT and LCP. More preferably, it is selected from the group consisting of PBT, PCT and LCP. Most preferably, it is PCT (i.e. a homopolymer obtained through the polycondensation of terephthalic acid with 1,4-cyclohexylenedimethanol).

The polymer composition according to the present invention may also comprise at least two polyesters. In such a case, the polyesters are preferably selected from the blends of PCT and LCP or PBT and PCT.

The polyesters used herein have advantageously an intrinsic viscosity of from about 0.6 to about 2.0 dl/g as measured in a 60:40 phenol/tetrachloroethane mixture or similar solvent at about 30°C. Particularly suitable polyesters for this invention have an intrinsic viscosity of 0.6 to 1.4 dl/g.

The polyesters used herein have a melting point, as measured by DSC according to ISO-11357-3, of advantageously at least 250°C, preferably at least 260°C, more preferably at least 270°C and most preferably at least 280°C. Besides, their melting point is of at most 350°C, preferably at most 340°C, more preferably at most 330°C and most preferably at most 320°C.

Particularly suitable polyesters for this invention have a melting point ranging from 280°C to 320°C.

The polyester is preferably present in an amount of at least 48 wt. %, more preferably at least 50 wt. %, still more preferably at least 52 wt. %, and most preferably at least 54 wt. %, based on the total weight of the composition.

The polyester is also present in an amount of advantageously at most 90 wt. %, preferably at most 85 wt. %, more preferably at most 80 wt. %, still more preferably at most 75 wt. %, and most preferably at most 70 wt. %, based on the total weight of the composition.

Excellent results were obtained when the polyester was present in the composition in an amount from about 48 to about 90 wt. %, preferably from about 50 to about 70 wt. %, based on the total weight of the composition.

### The hindered amine compound

The polymer composition according to the present invention comprises, in addition to the polyester, at least one hindered amine compound.

The term "hindered amine compound" is intended to denote derivatives of 2,2,6,6-tetramethyl piperidine well known in the art (see for example : Plastics Additives Handbook, 5th ed., Hanser, 2001). The hindered amine compound of the composition according to the present invention may either be of low or high molecular weight.

The hindered amine compounds of low molecular weight have typically a molecular weight of at most 900, preferably at most 800, more preferably of at most 700, still more preferably at most 600 and most preferably of at most 500 g/mol.

Examples of low molecular weight hindered amine compounds are listed in Table 1 below :

**Table 1 : Examples of low molecular weight hindered amine compounds**

| Formula | Structure |
|---|---|
| (a1) | 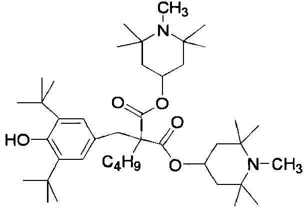 |
| (a2) | 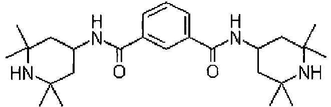 |
| (a3) | 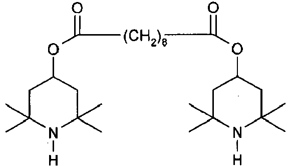 |
| (a4) | 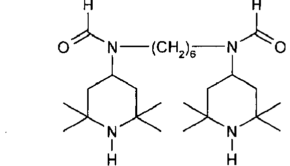 |
| (a5) | 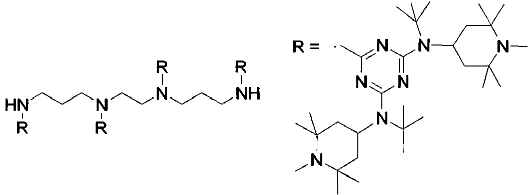 |
| (a6) | 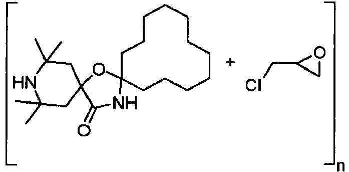 |
| (a7) | 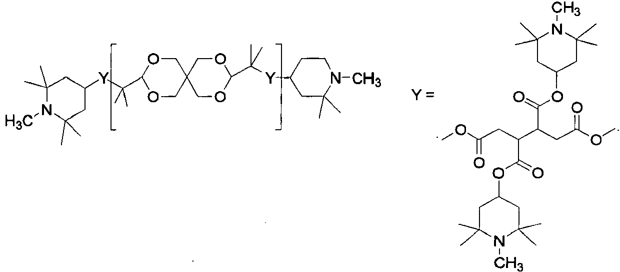 |
| (a8) | 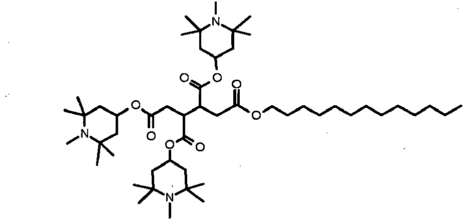 |
| (a9) | 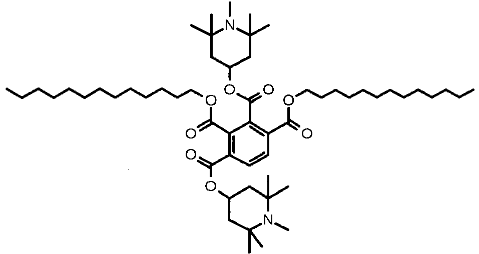 |
| (a10) | 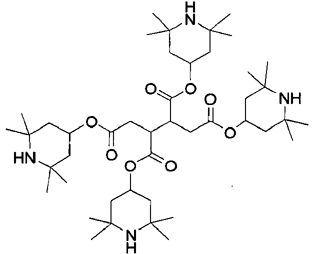 |
| (a11) | 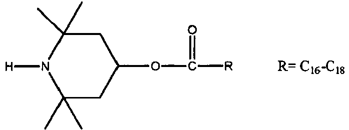 |
| (a12) | 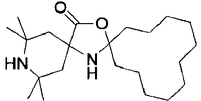 |

Among those low molecular weight compounds, the hindered amine is preferably selected from the group consisting of the ones corresponding to formula (a1), (a2), (a11) and (a12). More preferably, the hindered amine is selected from the group consisting of the ones corresponding to formula (a1), (a2), and (a12). Still more preferably, the hindered amine is the one corresponding to formula (a2).

The hindered amine compounds of high molecular weight are typically polymeric and have typically a molecular weight of at least 1000, preferably at least 1100, more preferably of at least 1200, still more preferably at least 1300 and most preferably of at least 1400 g/mol.

Examples of high molecular weight hindered amine compounds are listed in Table 2 below :

**Table 2 : Examples of high molecular weight hindered amine compounds**

| Formula | Structure |
|---|---|
| (b1) | 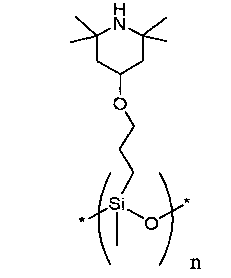 |
| (b2) | 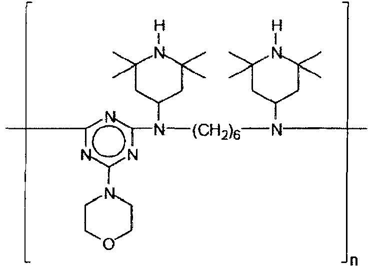 |
| (b3) | 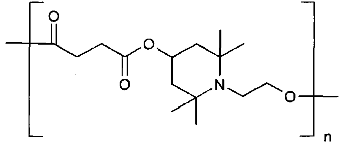 |
| (b4) | 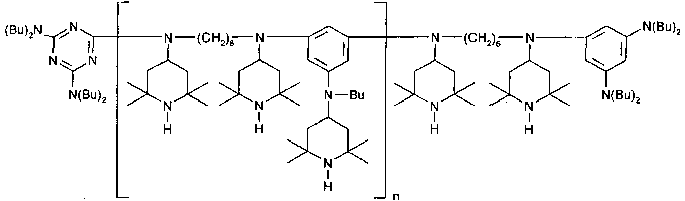 |
| (b5) | 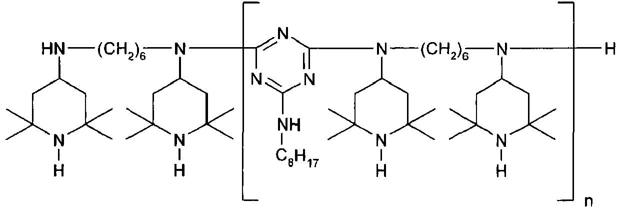 |
| (b6) | 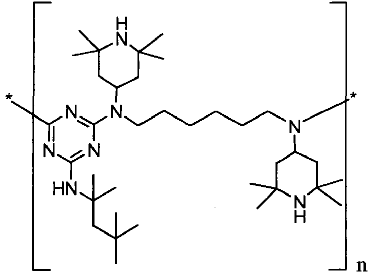 |

The "n" in the formulas (b1) to (b6) of Table 2 indicates the number of repeating units in the polymer and is usually an integrate equal or greater than 4.

Among those high molecular weight compounds, the hindered amine is preferably selected from the group consisting of the ones corresponding to formula (b2) and (b5). More preferably, the hindered amine is the one corresponding to formula (b2).

The hindered amine compound is typically present in an amount of advantageously at least 0.05 wt. %, more preferably at least 0.1 wt. %, still more preferably at least 0.15 wt. %, and most preferably at least 0.2 wt. %, based on the total weight of the composition.

The hindered amine compound is also typically present in an amount of advantageously at most 3.5 wt. %, preferably at most 3 wt. %, more preferably at most 2.5 wt. %, still more preferably at most 2.0 wt. %, even more preferably at most 0.8 wt. % and most preferably at most 0.6 wt. %, based on the total weight of the composition.

Excellent results were obtained when the hindered amine compound was present in the composition in an amount from about 0.05 to about 2 wt. %, preferably from about 0.1 to about 0.8 wt. %, and more preferably from about 0.2 to about 0.6 wt. %, based on the total weight of the composition.

### The phosphorous compound

The polymer composition according to the present invention comprises, in addition to the polyester and the at least one hindered amine compound, at least one phosphorous compound selected from the group consisting of phosphite esters, phosphonites and mixtures thereof.

A phosphite ester may be represented by the formula P(OR)₃, while a phosphonite may be represented by the formula P(OR)₂R, wherein each of R, can be the same or different and are typically independently selected from the group consisting of a C₁₋₂₀ alkyl, C₃₋₂₂ alkenyl, C₆₋₄₀ cycloalkyl, C₇₋₄₀ cycloalkylene, aryl, alkaryl or arylalkyl moiety.

The phosphorous compounds present in the composition according to the present invention are also well known in the art and are, for example, listed and detailed in Plastics Additives Handbook, 5th ed., Hanser, 2001.

Examples of phosphite esters are listed in the Table 3 below :

**Table 3 : Examples of phosphite ester**

| Formula | Structure |
|---|---|
| (α1) | 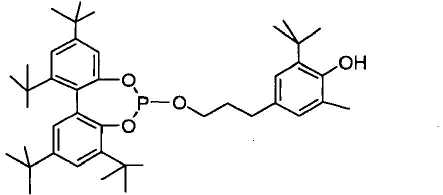 |
| (α2) | 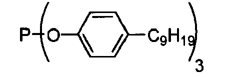 |
| (α3) | 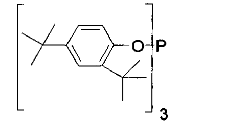 |
| (α4) | 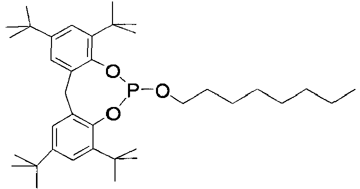 |
| (α5) | 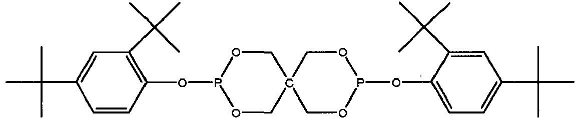 |
| (α6) | 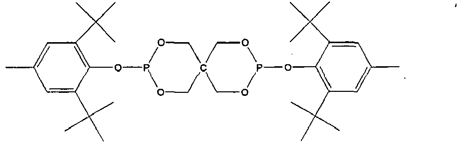 |
| (α7) | 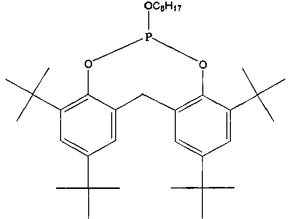 |
| (α8) | 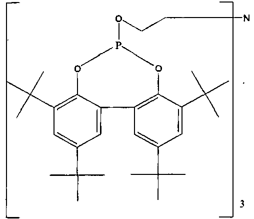 |
| (α9) | 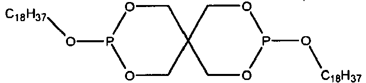 |
| (α10) | 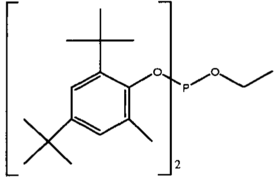 |
| (α11) | 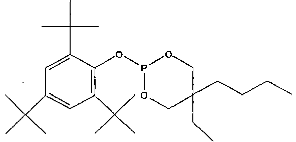 |
| (α12) | 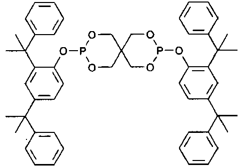 |

Among those phosphite esters, the phosphorous compound is preferably selected from the group consisting of the ones corresponding to formula (α5), (α9), and□ (α12). More preferably, the phosphorous compound is selected from the group consisting of the ones corresponding to formula (α5) and (α9). Still more preferably, the phosphite ester is the one corresponding to formula (α5).

Examples of phosphonites are listed in the table 4 below :

**Table 4 : Examples of phosphonites**

| Formula | Structure |
|---|---|
| (β1) | 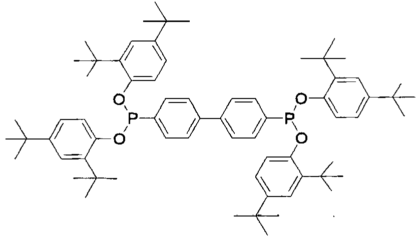 |
| (β2) | 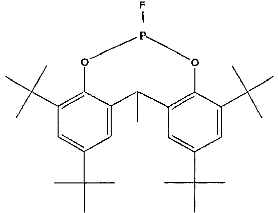 |

Preferably, the phosphonite is the one corresponding to formula (β1).

The phosphorous compound is preferably a phosphite ester and most preferably the phosphite ester corresponding to formula (α5) as above described.

The phosphorous compound is preferably present in an amount of at least 0.3 wt. %, more preferably at least 0.5 wt. %, still more preferably at least 0.7 wt. %, and most preferably at least 0.8 wt. %, based on the total weight of the composition.

The phosphorous compound is also preferably present in an amount of at most 5 wt. %, more preferably at most 3 wt. %, still more preferably at most 2.5 wt. %, even more preferably at most 2 wt. % and most preferably at most 1.8 wt. %, based on the total weight of the composition.

Excellent results were obtained when the phosphorous compound was present in the composition in an amount from about 0.3 to about 5 wt. %, preferably from about 0.5 to about 2 wt. %, and more preferably from about 0.7 to about 1.8 wt. %, based on the total weight of the composition.

### Optional ingredients

The invented composition may comprise other ingredients than the three listed above. In particular, the polymer composition may further comprise at least one reinforcing filler.

Reinforcing fillers are well known by the skilled in the art and may be added to the composition in accordance with the present invention. They are preferably selected from fibrous and particulate fillers. More preferably, the reinforcing filler is selected from mineral fillers (such as talc, mica, kaolin, calcium carbonate, calcium silicate, magnesium carbonate), glass fiber, carbon fiber, synthetic polymeric fiber, aramid fiber, aluminum fiber, titanium fiber, magnesium fiber, boron carbide fibers, rock wool fiber, steel fiber, wollastonite, etc. Still more preferably, it is selected from talc, mica, kaolin, calcium silicate, magnesium carbonate, glass fiber, carbon fiber and wollastonite. Even more preferably, the reinforcing filler is selected from glass fiber, wollastonite, carbon fiber, talc, mica and kaolin.

A particular class of fibrous fillers consists of whiskers, i.e. single crystal fibers made from various raw materials such as Al₂O₃, SiC, BC, Fe and Ni. Among fibrous fillers, glass fibers are preferred ; they include chopped strand A-, E-, C-, D-, S- and R-glass fibers, as described in chapter 5.2.3, p. 43-48 of Additives for Plastics Handbook, 2nd ed., John Murphy. Preferably, the filler is chosen from fibrous fillers.

In a preferred embodiment of the present invention the reinforcing filler is chosen from wollastonite and glass fiber. Excellent results were obtained when wollastonite and/or glass fibers were used. Glass fibers may have a round cross-section or an elliptic cross-section (also called flat fibers).

If present, the reinforcing filler is preferably present in an amount of at least 2 wt. %, more preferably at least 4 wt. %, still more preferably at least 5 wt. %, and most preferably at least 10 wt. %, based on the total weight of the composition according to the invention. When present, the reinforcing filler is also preferably present in an amount of at most 40 wt. %, more preferably at most 30 wt. %, still more preferably at most 25 wt. %, and most preferably at most 20 wt. %, based on the total weight of the composition according to the invention.

Excellent results were obtained when the reinforcing filler was present in the composition in an amount from about 5 to about 40 wt. %, preferably from about 5 to about 25 wt. %, and more preferably from about 10 to about 20 wt. %, based on the total weight of the composition.

The polymer composition according to the present invention may also comprise at least one white pigment, different from the reinforcing filler defined above.

The white pigment is preferably selected from the group consisting of TiO₂, ZnS₂, ZnO, and BaSO₄.

The white pigment is advantageously in the form of particles having a weight-average size (equivalent diameter) preferably of below 5 µm. Larger sizes may deleteriously affect the properties of the composition. Preferably, the weight-average size of the particles is of below 1 µm. Besides, it is preferably above 0.1 µm.

The shape of the particles is not particularly limited ; they may be notably round, flaky, flat, and so on.

The white pigment is preferably titanium dioxide (TiO₂). The form of titanium dioxide is not particularly limited and a variety of crystalline forms such as the anatase form, the rutile form, and the monoclinic type can be used. However, the rutile form is preferred due to its higher refraction index and its superior light stability. Titanium dioxide may or may not be treated with a surface treatment agent. Preferably the average particle size of the titanium oxide is in the range of 0.15 µm to 0.35 µm.

The surface of the titanium dioxide particles will preferably be coated. The titanium dioxide will preferably be first coated with an inorganic coating and then an organic coating that is applied over the inorganic coating. The titanium dioxide particles may be coated using any method known in the art. Preferred inorganic coatings include metal oxides. Organic coatings may include one or more of carboxylic acids, polyols, alkanolamines, and/or silicon compounds.

If present, the white pigment is preferably present in an amount of at least 1 wt. %, preferably of at least 6 wt. %, more preferably of at least 8 wt. %, even more preferably of at least 10 wt. %, and most preferably of at least 15 wt. %, based on the total weight of the composition. Besides, when present, the white pigment is also preferably present in an amount of at most 50 wt. %, preferably of at most 40 wt. %, more preferably of at most 35 wt. %, even more preferably of at most 30 wt. %, and most preferably of at most 25 wt. %, based on the total weight of the composition.

Excellent results were obtained when titanium dioxide was used in an amount of 10-30 wt. %, preferably of 15-25 wt. %, based on the total weight of the composition.

The compositions may also optionally contain up to about 15 wt. % of one or more polymeric tougheners. The toughener will typically be an elastomer having a relatively low melting point, generally less than 200°C, preferably less than 150°C, and that has attached to it functional groups that can react with the polyester (and optionally other polymers present). Since polyesters usually have carboxyl and hydroxyl groups present, the toughener will be generally selected among those comprising functional groups able to react with carboxyl and/or hydroxyl groups. Examples of such functional groups include epoxy, carboxylic anhydride, hydroxyl (alcohol), carboxyl, and isocyanate. Preferred functional groups are epoxy and carboxylic anhydride ; epoxy is especially preferred. Such functional groups are usually "attached" to the polymeric tougheners by grafting small molecules onto an already existing polymer or by copolymerizing a monomer containing the desired functional group when the polymeric tougheners molecules are made by copolymerization. As an example of grafting, maleic anhydride may be grafted onto a hydrocarbon rubber using free radical grafting techniques. The resulting grafted polymer has carboxylic anhydride and/or carboxyl groups attached to it.

The composition according to the present invention may also optionally contain up to about 5 % of at least one nucleating agent. Non-limitative examples of nucleating agents include sodium benzoate and derived structures there from, linear alcohols having 30-50 carbon atoms, talc, boron nitride, and LCP.

The compositions may optionally further contain up to about 3 wt. % of ultraviolet light stabilizers or UV blockers. Examples include triazoles and triazines, oxanilides, hydroxybenzophenones, benzoates, and α-cyanoacrylates. When present, the ultraviolet light stabilizers are preferably present in an amount of about 0.1 to about 3 wt. %, or preferably about 0.1 to about 1 wt. %, or more preferably about 0.1 to about 0.6 wt. %, of the total weight of the composition. The compositions according to the present invention are melt-mixed blends, wherein all of the polymeric components are well-dispersed within each other and all of the non-polymeric ingredients are well-dispersed in and bound by the polymer matrix, such that the blend forms a unified whole.

The composition according to the present invention may also comprise other polymers than the above mentioned polyester such as polycarbonate, polyethylene glycol, polysulfone, PEEK and polyphthalamide.

The composition according to the present invention may also comprise other optional ingredients such as mold release agents, plasticizers, lubricants, and other stabilizers, different from the ones described above.

Any melt-mixing method may be used to combine the polymeric components and non-polymeric ingredients of the present invention. For example, the polymeric components and non-polymeric ingredients may be added to a melt mixer, such as, for example, a single or twin-screw extruder, a blender, a kneader, or a Banbury mixer, either all at once through a single step addition, or in a stepwise fashion, and then melt-mixed. When adding the polymeric components and non-polymeric ingredients in a stepwise fashion, part of the polymeric components and/or non-polymeric ingredients are first added and melt-mixed with the remaining polymeric components and non-polymeric ingredients are subsequently added and further melt-mixed until a well-mixed composition is obtained.

Another aspect of the present invention relates to articles comprising the above-described polymer composition and in particular to parts of LED devices.

As used herein, the terms "light-emitting diode device" and "LED device" intend to denote a device comprising at least one light-emitting diode, an electrical connection capable of connecting the diode to an electrical circuit, and a housing partially surrounding the diode. The LED device may optionally have a lens that fully or partially covers the LED.

The articles prepared from the composition according to the present invention may be formed from the invented compositions by any suitable melt-processing method known to those skilled in the art, such as injection molding or the like.

The articles of the present invention are preferably parts of a LED device such as housings, reflectors and reflector plates.

The articles may be overmolded over a metal (such as copper or silver-coated copper) lead frame that can be used to make an electrical connection to an LED inserted into the housing. The article preferably has a cavity in the portion of the housing that surrounds the LED, which serves to reflect the LED light in the outward direction and towards a lens, if one is present. The cavity may be in a cylindrical, conical, parabolic or other curved form, and preferably has a smooth surface. Alternatively, the walls of the cavity may be parallel or substantially parallel to the diode. A lens may be formed over the diode cavity and may comprise an epoxy or silicone material.

The articles of the present invention may be incorporated into LED devices used in applications such as traffic signals, large area displays (including video displays), video screens, interior and exterior lighting, cellular telephone display backlights, automotive displays, vehicle brake lights, vehicle head lamps, laptop computer display backlights, pedestrian floor illumination, and flashlights.

### EXAMPLES

The disclosure will now be illustrated with working examples, which are intended to illustrate the present invention and are not intended to restrictively imply any limitations on the scope of the present disclosure.

The following commercially available materials were used :
*Polyester :* PCT Polyester from Eastman^{™} Chemical Products
*Glass fiber :*
   - Glass fiber-1 : OCV 995 from OCV™ Reinforcements
   - Glass fiber-2 : OCV 952A from OCV™ Reinforcements
   - Glass fiber-3 : T-127H from NEG (Nippon Electric Glass) Company ltd. *Titanium Dioxide :*
   - TiO₂-1 : Ti-Pure^{®} R-350 available from DuPont Titanium Technologies - rutile TiO₂ manufactured by chloride process, treated with silica and alumina.
   - TiO₂-2 : Tipaque PC-3 available from Ishihara Sangyo Kaisha, Ltd - rutile TiO₂ manufactured by chloride process, treated with silica and alumina.
*Stabilizers and additives :*
   - Phosphorous compound 1 (PC - 1) : ULTRANOX^{®} 626 is a phosphite ester stabilizer - (2,4-di-t-butylphenyl)pentaerythritol diphosphite of formula (α5) as above detailed and commercially available from Chemtura.
   - Phosphorous compound 2 (PC - 2) : IRGAFOS^{®} P-EPQ is a phosphonite stabilizer - tetrakis(2,4-di-tert-butylphenyl)[1,1-biphenyl]-4,4'diylbisphosphonite of formula (β1) as above detailed and commercially available from Ciba.
   - Hindered amine : NYLOSTAB^{®} SEED stabilizer is a hindered amine corresponding to formula (a2) and commercially available from Clariant Corp.
   - Talc : Imi-Fabi HTP-4 available from Imi Fabi L.L.C..
   - LLDPE : Linear low-density polyethylene GRSN-9820 NT 7 commercially available from DOW.

### General procedure for the preparation of the compositions

The polyester resin described above was fed to the first barrel of a ZSK-26 twin screw extruder comprising 12 zones via a loss in weight feeder. The barrel set-point temperatures were in the range of 240-300°C and the resins were melted before zone 5. The other ingredients were fed at zone 5 through a side stuffer via a loss in weight feeder. The screw rate was 175 rpm. The extrudates were cooled and pelletized using conventional equipment.

The nature and quantity of the various ingredients used are summarized in Table 5, indicating the amount of each ingredient in weight percent.

**Table 5 : Nature and quantity of the ingredients used**

| | (CE1) | (CE2) | (CE3) | (CE4) | (CE5) | (E6) | (E7) |
|---|---|---|---|---|---|---|---|
| **Polyester (%)** | 57.35 | 58.35 | 67.35 | 62.75 | 63.55 | 67.55 | 62.55 |
| **Reinforcing filler (%)** | | | | | | | |
| Glass fiber-1 | | | 10 | 15 | 15 | 10 | 15 |
| Glass fiber-2 | 20 | | | | | | |
| Glass fiber-3 | | 20 | | | | | |
| **White pigment (%)** | | | | | | | |
| TiO₂-1 | | | 20 | | | 20 | |
| TiO₂-2 | 20 | 20 | | 20 | 20 | | 20 |
| **Stabilizers (%)** | | | | | | | |
| PC - 1 | 1.4 | | 1.4 | | | 1 | |
| PC - 2 | | | | 1 | | | 1 |
| Hindered amine | | 0.4 | | | 0.2 | 0.2 | 0.2 |
| **Other additives (%)** | | | | | | | |
| Talc | 1 | 1 | 1 | 1 | 1 | 1 | 1 |
| LLDPE | 0.25 | 0.25 | 0.25 | 0.25 | 0.25 | 0.25 | 0.25 |

### Reflectance measurements

Behavior of a part made from the inventive composition in a LED device has been simulated by exposing samples under light at 180°C for 12 days. Therefore, each one of the compositions of example E4 and comparative examples CE1-CE3 were used to prepare discs of about 50 mm diameter with a thickness of about 1.6 mm.

Discs were placed in an oven at 180°C equipped with a light fixture comprising a lamp 400W UV F/2 and an Optivex™ UV filter for 12 days. Reflectance was measured with BKY-Gardner photo-spectrometer. The reflectivity results on the discs as molded and on discs after exposure to light and high heat (180°C) for 12 days are summarized in Table 6, as well as the percentages of retention of reflectivity at a wavelength of 460 nm.

**Table 6 : Reflectivity retention measurements**

| **Reflectivity at 460 nm (%)** | (CE1) | (CE2) | (CE3) | (CE4) | (CE5) | (E6) | (E7) |
|---|---|---|---|---|---|---|---|
| - as molded | 91.0 | 85.2 | 92.0 | 93.4 | 95.3 | 93.7 | 93.7 |
| - after light and high treatment | 57.4 | 44.0 | 59.8 | 58.6 | 55.9 | 64.6 | 62.4 |
| | | | | | | | |
| **Reflectivity retention (%)** | 63 | 52 | 65 | 63 | 59 | 70 | 67 |

### Results

The compositions according to the present invention E6 and E7 surprisingly show higher retention of reflectivity as molded and after exposure to light and high heat for 12 days compared to comparative examples CE1 to CE5.

The data summarized in Table 6 well demonstrate the synergy observed between the phosphite ester compound such as Ultranox^{®} 626 or Irgafos^{®} P-EPQ and the hindered amine compound such as Nylostab^{®} S-EED. The compositions according to the present invention achieve outstanding optical properties both on the molded article as such and the same article having been submitted to light and thermal treatment, which is intended to mimic conditions to which the materials might be exposed during the manufacture of LED devices.

Comparative examples CE1 and CE3 provide evidence that the phosphorous compound alone is not enough in providing the outstanding optical properties obtained with the example according to the invention.

Comparative examples CE2 and CE5 clearly show that the presence of a hindered amine compound alone is not efficient to provide sufficient stability to the composition when exposed to both light and high heat (180°C) for a long period (12 days).

Examples E6 and E7, which combine both a phosphorous compound (ULTRANOX^{®} 626 stabilizer or IRGAFOS^{®} P-EPQ) and a hindered amine compound (Nylostab^{®} S-EED), achieves unexpected results in terms of retention of reflectivity after light and high heat exposure. This result was obtained even if a lower total amount of additives was used when compared to the amounts used in CE1 and CE3.

Examples E6 and E7 according to the present invention comply with a wide set of requirements as set forth previously (notably good processability, high dimensional stability, high mechanical strength) and also surprisingly feature a reflectance after light and high heat treatment of more than 62 %. Those compositions are therefore excellent candidates for the manufacture of LED components.

## Claims

1. Polymer composition comprising, based on the total weight of the polymer composition :
- at least one polyester ;
- at most 3.5 wt. % of at least one hindered amine compound, and
- at least 0.3 wt. % of at least one phosphorous compound selected from the group consisting of phosphite esters, phosphonites and mixtures thereof.

2. Polymer composition according to claim 1, wherein the polyester is present in an amount of 50-70 wt. %, based on the total weight of the composition.

3. Polymer composition according to anyone of the preceding claims,
wherein at least 50 mol % of the recurring units of the polyester are obtained through the polycondensation of terephthalic acid with 1,4-cyclohexylenedimethanol.

4. Polymer composition according to anyone of the preceding claims,
wherein the polyester is poly(1,4-cyclohexylenedimethylene terephthalate).

5. Polymer composition according to anyone of the preceding claims,
wherein the at least one hindered amine compound is present in an amount of 0.05 to 2 wt. %, based on the total weight of the composition.

6. Polymer composition according to anyone of the preceding claims,
wherein the at least one phosphorous compound is present in an amount of 0.5 to 2 wt. %, based on the total weight of the composition.

7. Polymer composition according to anyone of the preceding claims,
wherein it further comprises at least one white pigment.

8. Polymer composition according to claim 6, wherein the white pigment is selected from TiO₂, ZnS₂, ZnO, and BaSO₄.

9. Polymer composition according to claim 7 or 8, wherein the white pigment is TiO₂.

10. Polymer composition according to claim 9, wherein the TiO₂ is present in an amount of 10-40 wt. %, based on the total weight of the composition.

11. Polymer composition according to anyone of the preceding claims, wherein it further comprises at least one reinforcing filler.

12. Polymer composition according to claim 11, wherein the reinforcing filler is selected from glass fiber, wollastonite, carbon fiber, talc, mica and kaolin.

13. Polymer composition according to claim 11 or 12, wherein the reinforcing filler is present in 5-40 wt. %, based on the total weight of the composition.

14. Article comprising the polymer composition according to any one of the preceding claims.

15. Article according to claim 14, wherein it is a part of an LED device.

## Patentansprüche

1. Polymerzusammensetzung, umfassend, bezogen auf das Gesamtgewicht der Polymerzusammensetzung :
- mindestens einen Polyester;
- höchstens 3,5 Gew.- % mindestens einer gehinderten Aminverbindung und
- mindestens 0,3 Gew.- % mindestens einer Phosphorverbindung aus der Gruppe bestehend aus Phosphitestern, Phosphoniten und Mischungen davon.

2. Polymerzusammensetzung nach Anspruch 1, wobei der Polyester in einer Menge von 50-70 Gew.- %, bezogen auf das Gesamtgewicht der Zusammensetzung, vorliegt.

3. Polymerzusammensetzung nach einem der vorhergehenden Ansprüche, wobei mindestens 50 Mol- % der Wiederholungseinheiten des Polyesters durch die Polykondensation von Terephthalsäure mit 1,4-Cyclohexylendimethanol erhalten werden.

4. Polymerzusammensetzung nach einem der vorhergehenden Ansprüche, wobei es sich bei dem Polyester um Poly(1,4-cyclohexylendimethylenterephthalat) handelt.

5. Polymerzusammensetzung nach einem der vorhergehenden Ansprüche, wobei die mindestens eine gehinderte Aminverbindung in einer Menge von 0,05 bis 2 Gew.- %, bezogen auf das Gesamtgewicht der Zusammensetzung, vorliegt.

6. Polymerzusammensetzung nach einem der vorhergehenden Ansprüche, wobei die mindestens eine Phosphorverbindung in einer Menge von 0,5 bis 2 Gew.-%, bezogen auf das Gesamtgewicht der Zusammensetzung, vorliegt.

7. Polymerzusammensetzung nach einem der vorhergehenden Ansprüche, wobei sie ferner mindestens ein Weißpigment umfasst.

8. Polymerzusammensetzung nach Anspruch 6, wobei das Weißpigment aus TiO₂, ZnS, ZnO und BaSO₄ ausgewählt ist.

9. Polymerzusammensetzung nach Anspruch 7 oder 8, wobei es sich bei dem Weißpigment um TiO₂ handelt.

10. Polymerzusammensetzung nach Anspruch 9, wobei das TiO₂ in einer Menge von 10-40 Gew.- %, bezogen auf das Gesamtgewicht der Zusammensetzung, vorliegt.

11. Polymerzusammensetzung nach einem der vorhergehenden Ansprüche, wobei sie ferner mindestens einen verstärkenden Füllstoff umfasst.

12. Polymerzusammensetzung nach Anspruch 11, wobei der verstärkende Füllstoff aus Glasfaser, Wollastonit, Kohlefaser, Talkum, Glimmer und Kaolin ausgewählt ist.

13. Polymerzusammensetzung nach Anspruch 11 oder 12, wobei der verstärkende Füllstoff in einer Menge von 5-40 Gew.- %, bezogen auf das Gesamtgewicht der Zusammensetzung, vorliegt.

14. Artikel, umfassend die Polymerzusammensetzung nach einem der vorhergehenden Ansprüche.

15. Artikel nach Anspruch 14, wobei er Teil einer LED-Vorrichtung ist.

## Revendications

1. Composition polymère comprenant, rapporté au poids total de la composition polymère :
- au moins un polyester ;
- au plus 3,5 % en poids d'au moins un composé d'amine stériquement encombrée ; et
- au moins 0,3 % en poids d'au moins un composé de phosphore choisi dans le groupe constitué par les esters de phosphite, les phosphonites et les mélanges de ceux-ci.

2. Composition polymère selon la revendication 1, dans laquelle le polyester est présent dans une quantité de 50-70 % en poids, rapporté au poids total de la composition.

3. Composition polymère selon l'une quelconque des revendications précédentes, dans laquelle au moins 50 % en moles des motifs récurrents du polyester sont obtenus par la polycondensation d'acide téréphtalique avec du 1,4-cyclohexylènediméthanol.

4. Composition polymère selon l'une quelconque des revendications précédentes, dans laquelle le polyester est le poly(téréphtalate de 1,4-cyclohexylènediméthylène).

5. Composition polymère selon l'une quelconque des revendications précédentes, dans laquelle l'au moins un composé d'amine stériquement encombrée est présent dans une quantité de 0,05 à 2 % en poids, rapporté au poids total de la composition.

6. Composition polymère selon l'une quelconque des revendications précédentes, dans laquelle l'au moins un composé de phosphore est présent dans une quantité de 0,5 à 2 % en poids, rapporté au poids total de la composition.

7. Composition polymère selon l'une quelconque des revendications précédentes, qui comprend en outre au moins un pigment blanc.

8. Composition polymère selon la revendication 6, dans laquelle le pigment blanc est choisi parmi TiO₂, ZnS, ZnO et BaSO₄.

9. Composition polymère selon la revendication 7 ou 8, dans laquelle le pigment blanc est TiO₂.

10. Composition polymère selon la revendication 9, dans laquelle le TiO₂ est présent dans une quantité de 10-40 % en poids, rapporté au poids total de la composition.

11. Composition polymère selon l'une quelconque des revendications précédentes, qui comprend en outre au moins une charge de renforcement.

12. Composition polymère selon la revendication 11, dans laquelle la charge de renforcement est choisie parmi la fibre de verre, la wollastonite, la fibre de carbone, le talc, le mica et le kaolin.

13. Composition polymère selon la revendication 11 ou 12, dans laquelle la charge de renforcement est présente à 5-40 % en poids, rapporté au poids total de la composition.

14. Article comprenant la composition polymère selon l'une quelconque des revendications précédentes.

15. Article selon la revendication 14, qui constitue une partie d'un dispositif à DEL.
